# EUROPÄISCHE PATENTANMELDUNG

(11) **EP 1 226 914 A1**
(43) Veröffentlichungstag der Anmeldung: **31.07.2002**
(21) Anmeldenummer: 01102002.1
(22) Anmeldetag: 30.01.2001
(51) Int. Cl.: B29C 45/14

(54) **Verfahren zur Herstellung von Kunststoffformteilen**

(71) Anmelder: An der Heiden, Dominik, 46485 Wesel (DE)
(72) Erfinder: An der Heiden, Dominik, 46485 Wesel (DE)
(74) Vertreter: Stenger, Watzke & Ring Patentanwälte

(57) **Zusammenfassung**

Die Erfindung betrifft ein Verfahren zur Herstellung von Kunststoffformteilen (10) durch Spritzguß und/oder Spritzpressen, welches dadurch gekennzeichnet ist, daß ein die Oberfläche (11) des Kunststoffformteils (10) bildendes Material in die auszuspritzenden Hohlbereiche (4) des Spritzwerkzeugs (1) eingebracht wird und eine härtbare Formmasse (9) unter Druck in die Konturen des Spritzwerkzeugs (1) gepreßt wird, wobei die Formmasse (9) und das die Oberfläche (11) des Kunststoffformteils (10) bildende Material derart aufeinander abgestimmt werden, daß nach Aushärtung der Formmasse (9) eine beständige Verbindung zwischen dem Formteil (10) und dem die Oberfläche (11) bildenen Material besteht. Dadurch können in wirtschaftlicher Weise Formteile (10) aus kunststoff mit dekorativen und/oder funktionellen Oberflächen (11) bereits bei der Herstellung des Formteils (10) gebildet werden. Dadurch entfallen Nachbehandlungen wie Grundieren und Lackieren und somit werden Arbeitsschritte eingespart, was das Verfahren außerordentlich wirtschaftlich macht.

## Beschreibung

Die Erfindung betrifft ein Verfahren zur Herstellung von Kunststoffformteilen durch Spritzguß und/oder Spritzpressen.

Verfahren zur Herstellung von Kunststoffformteilen durch Spritzguß und/oder Spritzpressen sind im Stand der Technik vielfach bekannt. Derartige Verfahren werden insbesondere für die Herstellung von Massenartikeln angewandt, da Spritzguß- oder Spritzpressverfahren die wirtschaftliche Produktion unterschiedlichster Formteile ermöglichen. Durch eine Reihe von kunststoffspezifischen Eigenschaften ist es jedoch oftmals vonnöten, das Formteil aus Kunststoff nachzubehandeln. Dies ist insbesondere dann angebracht, wenn das jeweilige Formteil bestimmten dekorativen Anforderungen genügen muß oder spezielle funktionelle Eigenschaften aufweisen muß. Daher wird die an sich wenig ansehnliche Kunststoffoberfläche im Anschluß an den Herstellungsprozeß oftmals optisch veredelt oder so nachbehandelt, daß ihr besondere funktionelle Eigenschaften verliehen werden. So werden Formteile wie Rahmen, Türen o.ä. beispielsweise galvanisiert, laminiert oder grundiert und lackiert, um die Kunststoffoberfläche optisch ansehnlich zu machen oder funktionell zu verändern.

Diese Nachbehandlungen sind mit einem erhöhten Arbeits-, Produktions- und somit Kostenaufwand verbunden, der insbesondere in der Massenartikelherstellung nachteilig ist.

Der Erfindung liegt daher die **Aufgabe** zu Grunde, ein Verfahren zur Herstellung von Kunststoffformteilen bereitzustellen, das die einfache und wirtschaftliche Herstellung von Kunststoffformteilen mit unterschiedlichen Oberflächen ermöglicht.

**Gelöst** wird diese Aufgabe, indem mit der Erfindung ein Verfahren zur Herstellung von Kunststoffformteilen durch Spritzguß und/oder Spritzpressen bereitgestellt wird, welches dadurch gekennzeichnet ist, daß ein die Oberfläche des Kunststoffformteils bildendes Material in die auszuspritzenden Hohlbereiche des Spritzwerkzeugs eingebracht wird und eine härtbare Formmasse unter Druck in die Konturen des Spritzwerkzeugs gepreßt wird, wobei die Formmasse und das die Oberfläche des Kunststoffformteils bildende Material derart aufeinander abgestimmt werden, daß nach Aushärtung der Formmasse eine beständige Verbindung zwischen dem Formteil und dem die Oberfläche bildenden Material besteht.

Das erfindungsgemäße Verfahren ermöglicht es so in vorteilhafter Weise, ein Kunststoffformteil herzustellen, welches direkt bei der Herstellung durch die geeignete Wahl eines die Oberfläche des Kunststoffformteils bildenden Materials mit einer dekorativen und/oder funktionellen Oberfläche versehen werden kann.

Dabei wird ein die Oberfläche des Kunststoffformteils bildendes Material derartig in dem jeweiligen Spritzguß- bzw. Spritzpreßwerkzeug eingebracht, daß die auszuspritzenden Hohlbereiche wenigstens teilweise mit dem die Oberfläche des Kunststoffformteils bildenden Material bedeckt sind. Durch dieses Merkmal ist es möglich, die Bereiche, in denen das Kunststoffformteil mit der jeweiligen Oberfläche versehen werden soll, an das jeweils herzustellende Formteil anzupassen. So kann das die Oberfläche des Kunststoffformteils bildende Material beispielsweise die gesamten auszuspritzenden Hohlbereiche des Spritzwerkzeugs bedecken. Dadurch kann es später die gesamte Oberfläche des jeweiligen Kunststoffformteils ausbilden. Es ist jedoch auch möglich, daß das die Oberfläche des Kunststoffformteils bildende Material nur in Teilbereiche des Spritzwerkzeugs eingebracht wird, so daß bestimmte Muster und Verzierungen durch das die Oberfläche bildende Material bei der Herstellung des Formteils aufgebracht werden.

Nach einer Heizphase wird eine härtbare Formmasse unter Druck in die Konturen des Spritzwerkzeugs gepreßt. Die jeweilige Temperatur der Heizphase ist in Abhängigkeit von der jeweils verwendeten Formmasse bzw. dem die Oberfläche ausbildenden Material zu wählen.

Gemäß einem weiteren Merkmal der vorliegenden Erfindung werden das die Oberfläche des Kunststoffformteils bildende Material und die Formmasse derartig aufeinander abgestimmt, daß nach Aushärtung der Formmasse eine beständige Verbindung zwischen dem Formteil und dem die Oberfläche bildenden Material besteht. Durch dieses vorteilhafte Merkmal wird gewährleistet, daß in einem Arbeitsschritt ein Formteil mit einer dekorativen und/oder funktionellen Oberfläche bereitgestellt wird, wobei eine feste Verbindung zwischen dem die Oberfläche bildenden Material und dem eigentlichem Formteil ausgebildet wird. Dadurch entfallen ansonsten notwendige zusätzliche Bearbeitungsschritte.

Mit der Erfindung wird ein Verfahren bereitgestellt, welches es ermöglicht, in einem Arbeitsschritt Kunststoffformteile herzustellen, welche eine ansehnliche und/oder funktionelle Oberfläche aufweisen. Dadurch werden in vorteilhafter Weise Arbeitsschritte eingespart, da auf bislang notwendige Nachbehandlungen wie beispielsweise Grundieren und Lackieren der Kunststoffformteile verzichtet werden kann. Dies bedingt auch die außerordentliche Wirtschaftlichkeit des Verfahrens, da neben aufwendigen Nachbehandlungen auch die Notwendigkeit von Zwischenlagern für die nachzubehandelnden Formteile entfällt. Insgesamt ist es durch das erfindungsgemäße Verfahren möglich, Massenartikel mit dekorativen und/oder funktionellen Oberflächen in einem Arbeitsgang herzustellen, ohne daß aufwendige Nachbehandlungen erforderlich sind. Aufgrund der außerordentlichen Zeitersparnis kann die Produktivität und somit auch die Wirtschaftlichkeit einer Produktionsanlage erheblich gesteigert werden. Da die Gestaltung und Beschaffenheit des die Oberfläche des Kunststoffformteils ausbildenden Materials unterschiedlich wählbar ist, können mit einem Werkzeug bezogen auf die Oberflächengestaltung unterschiedliche Formteile hergestellt werden.

Gemäß einer vorteilhaften Ausführungsform ist das die Oberfläche des Kunststoffformteils bildende Material eine Kunststofffolie. Aber auch andere Materialien können eingesetzt werden, so auch Naturstoffe wie Leinen o.ä. oder beispielsweise flüssige Kunststoffe.

Die Verwendung einer Kunststofffolie hat sich als vorteilhaft erwiesen. Dabei werden die auszuspritzenden Hohlbereiche des Spritzwerkzeugs wenigstens teilweise mit der Kunststofffolie bedeckt und die härtbare Formmasse wird unter Druck einseitig der Folienfläche in das Spritzwerkzeug gespritzt und die Formmasse wird mit der Kunststoffolie in die Konturen des Spritzwerkzeugs gepreßt. Dadurch daß die Formmasse einseitig der Folienfläche in das Spritzwerkzeug gepreßt wird, ist gewährleistet, daß die andere Seite der Folienfläche in ihrer ursprünglichen dekorativen und/oder funktionellen Oberflächengestaltung erhalten bleibt, wobei diese nach Aushärtung der Formmasse die Oberfläche des konturierten Formteils bildet.

Es ist dabei insbesondere vorteilhaft, eine Kunststofffolie zu verwenden, welche wenigstens einseitig als Dekorationsoberfläche und/oder Funktionsoberfläche ausgebildet ist. Diese Dekorationsoberfläche kann beliebig gestaltet werden, so beispielsweise farbig, strukturiert, glänzend und vieles mehr. Die unterschiedlichsten Folien können mit dem erfindungsgemäßen Verfahren eingesetzt werden, so daß die dekorativen Möglichkeiten ausgesprochen groß sind und das Verfahren vielseitig anwendbar ist. Die Folie wird dergestalt in das Spritzwerkzeug eingelegt, daß die die spätere Oberfläche ausbildende Dekorationsfläche der Kunststofffolie dem Hohlbereich des Spritzwerkzeugs zugewandt ist und die Formmasse auf die Rückseite der Dekorationsfläche gespritzt wird.

Als Kunststofffolien können beispielsweise Folien aus PVC oder PMMA verwendet werden. Neben der Erzeugung dekorativer Oberflächen kann das erfindungsgemäße Verfahren auch dazu verwandt werden, die Kunststoffformteile mit Oberflächen mit besonderen Eigenschaften zu versehen. So können Folien aus beispielsweise besonders kratz- und/oder schlagfesten Material verwendet werden. Auch hier können die Folien beliebig nach den jeweiligen Anforderungen an die Oberfläche des Formteils ausgewählt werden.

Als Spritzmedium können beispielsweise duroplastische und/oder thermoplastische Kunststoffformmassen verwendet werden. Die Verwendung von PU-Schaum hat sich für bestimmte Anwendungen, wie beispielsweise bei der Rahmenherstellung, als vorteilhaft erwiesen.

Es ist vorteilhaft, eine tiefziehfähige Kunststofffolie zu verwenden, da so gewährleistet ist, daß die Folie sich den Konturen des Spritzwerkzeugs anpassen kann. Bei der Wahl der Größe der in dem Spritzwerkzeug zu plazierenden Kunststofffolie sind die Abmessungen der an die Geometrie des jeweils herzustellenden Formteils angepaßten Hohlbereiche des Spritzwerkzeugs zu berücksichtigen, um zu gewährleisten, daß die Folie ausreichend groß ist, um die spätere Oberfläche des konturierten Formteils auszubilden. Aus wirtschaftlichen Gesichtspunkten sollte die Größe der Folie so gewählt werden, daß praktisch keine Überstände nach Fertigstellung des Formteils entstehen.

Sofern Folienüberstände auftreten, können diese entfernt werden. Dies kann beispielsweise mittels eines Bandschleifers erfolgen.

Als Spritzwerkzeug kann ein Mehrfachwerkzeug verwendet werden. Dadurch können mehrere Formteile in einem Arbeitsgang hergestellt werden. Eventuell zusammenhängende Kunststoffformteile können nach dem Preßvorgang getrennt werden.

Mit dem erfindungsgemäßen Verfahren können unterschiedliche Formteile, wie Bilderrahmen, Türrahmen oder andere Kunststoffformteile sowohl mit dekorativen, als auch mit funktionellen Oberflächen mit besonderen Eigenschaften versehen werden. Da die Kunststoffolien bezüglich dekorativer Gestaltung und/oder funktionellen Eigenschaften fast beliebig ausgewählt werden können, ist das erfindungsgemäße Verfahren äußerst vielseitig einsetzbar.

Weitere Vorteile und Merkmale ergeben sich anhand der Figurenbeschreibung, die ausschließlich der Erläuterung dient und nicht beschränkend ist. Dabei zeigen:

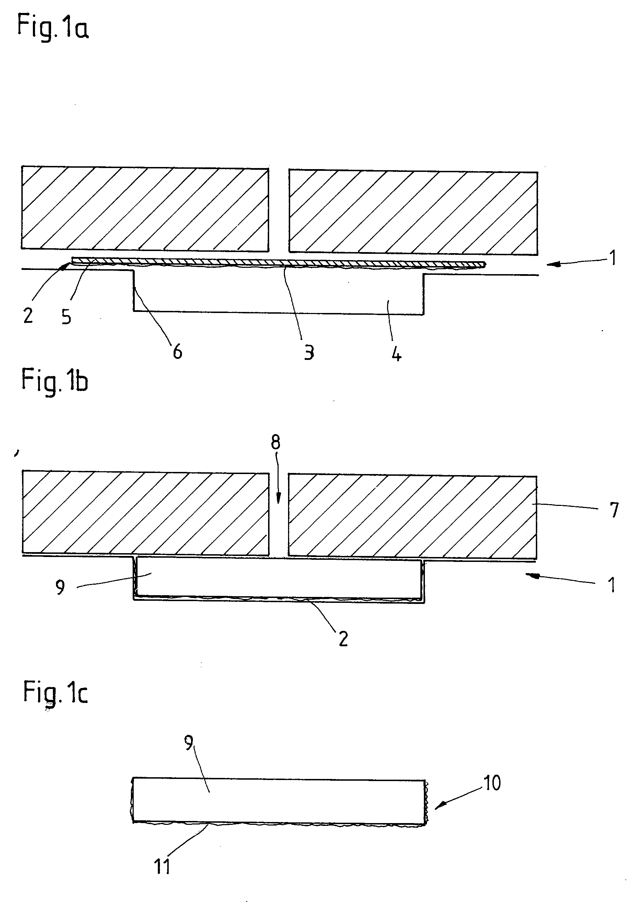

- Figur 1 a-c: schematisch die wichtigsten Schritte des erfindungsgemäßen Verfahrens.

Figur 1 zeigt schematisch die wichtigsten Schritte des erfindungsgemäßen Verfahrens, wobei in diesem Ausführungsbeispiel das Kunststoffformteil durch Spritzguß hergestellt wird. Als das die Oberfläche bildende Material wird in diesem Ausführungsbeispiel eine Kunststofffolie verwendet. In Figur 1 a ist das Spritzgußwerkzeug 1, welches sich in geöffneter Stellung befindet, dargestellt. In das Werkzeug 1 ist eine Folie 2 eingelegt. Die Folie 2 weist eine strukturierte Oberfläche 3 auf, welche durch die gewellte Linie symbolisiert wird. Die Folie 2 wird über den Hohlbereich 4 des Werkzeugs 1 plaziert, welcher in diesem Ausführungsbeispiel eine einfache rechteckige Form, beispielsweise für die Herstellung einer Tür, aufweist. Die Größe der Folie 2 ist so gewählt, daß die Länge der über den Hohlbereich überstehenden Enden 5 der Folienfläche an die Höhe der Seitenwände 6 des Hohlbereichs 4 angepasst sind.

Figur 1 b zeigt das Werkzeug 1, welches sich in geschlossenem Zustand befindet. Der Deckel 7 ist geschlossen und durch den Ausguß 8 wurde die aushärtbare Formmasse 9 in das Werkzeug eingespritzt. Durch die Formmasse 9 und den applizierten Druck wurde gemäß diesem Ausführungsbeispiel die Folie 2 in den Hohlbereich 4 gepreßt. Aufgrund der Abstimmung zwischen Formmasse und Kunststofffolie aufeinander, wird eine beständige Verbindung zwischen Formmasse und Kunststofffolie wenigstens nach der Aushärtung der Formmasse ausgebildet. Es ist dabei auch denkbar, daß die Kunststofffolie bereits vor Einbringung der Formmasse in die Konturen des Formteils gepreßt wird. So beispielsweise durch einen Stempel o.ä..

Figur 1 c zeigt das fertige, ausgehärtete Formteil 10 mit der ehemaligen Kunststofffolie als Oberfläche. Die Folie und die ausgehärtete Formmasse 9 weisen eine feste Verbindung zueinander auf und die in diesem Ausführungsbeispiel strukturierte Seite der Kunststofffolie bildet die Oberfläche 11 des fertigen Formteils. Durch das erfindungsgemäße Verfahren wird das Formteil bereits im Fertigungsprozeß durch den Einsatz der Kunststofffolie mit einer funktionalen Oberfläche versehen, welche je nach Bedarf spezielle Eigenschaften und/oder dekorative Ausgestaltungen aufweist.

### Bezugszeichenliste

- 1: Spritzgußwerkzeug
- 2: Folie
- 3: Folienoberfläche
- 4: Hohlbereich
- 5: überstehende Enden
- 6: Seitenwände des Hohlbereichs
- 7: Deckel
- 8: Ausguß
- 9: Formmasse
- 10: Formteil
- 11: Oberfläche des Formteils

## Patentansprüche

1. Verfahren zur Herstellung von Kunststoffformteilen durch Spritzguß und/oder Spritzpressen,
**dadurch gekennzeichnet,**
**daß** ein die Oberfläche des Kunststoffformteils bildendes Material in die auszuspritzenden Hohlbereiche des Spritzwerkzeugs eingebracht wird und eine härtbare Formmasse unter Druck in die Konturen des Spritzwerkzeugs gepreßt wird, wobei die Formmasse und das die Oberfläche des Kunststoffformteils bildende Material derart aufeinander abgestimmt werden, daß nach Aushärtung der Formmasse eine beständige Verbindung zwischen dem Formteil und dem die Oberfläche bildenden Material besteht.

2. Verfahren nach Anspruch 1, **dadurch gekennzeichnet, daß** das die Oberfläche des Kunststoffformteils bildende Material eine Kunststofffolie ist, wobei die auszuspritzenden Hohlbereiche des Spritzwerkzeugs wenigstens teilweise mit der Kunststofffolie bedeckt werden und die härtbare Formmasse unter Druck einseitig der Folienfläche in das Spritzwerkzeug gepreßt wird und die Formmasse mit der Kunststofffolie in die Konturen des Spritzwerkzeugs gepreßt wird.

3. Verfahren nach einem oder mehreren der Ansprüche 1 und 2, **dadurch gekennzeichnet, daß** eine wenigstens einseitig als Dekorations- und/oder Funktionsoberfläche ausgebildete Kunststofffolie verwendet wird.

4. Verfahren nach einem oder mehreren der obigen Ansprüche, **dadurch gekennzeichnet, daß** die Folie dergestalt in dem Spritzwerkzeug plaziert wird, daß die Dekorations- und/oder Funktionsoberfläche der Kunststofffolie die spätere Oberfläche des Kunststoffformteils bildet und Formmasse auf die Rückseite der als Dekorations- und/oder Funktionsoberfläche ausgebildeten Folienfläche gespritzt wird.

5. Verfahren nach einem oder mehreren der Ansprüche 1 bis 5, **dadurch gekennzeichnet, daß** eine tiefziehfähige Kunststofffolie verwendet wird.

6. Verfahren nach einem oder mehreren der Ansprüche 1 bis 5, **dadurch gekennzeichnet, daß** nach Entnahme des Kunststoffformteils überstehende Folienrückstände entfernt werden.

7. Verfahren nach einem oder mehreren der Ansprüche 1 bis 6, **dadurch gekennzeichnet, daß** die Größe der Folie so an den zu bedeckenden Bereich des jeweiligen Spritzwerkzeugs angepaßt wird, daß nach Fertigstellung des Formteils praktisch keine Überstände entstehen.

8. Verfahren nach einem oder mehreren der Ansprüche 1 bis 7, **dadurch gekennzeichnet, daß** als Spritzwerkzeug ein Mehrfachwerkzeug verwendet wird.

9. Verfahren nach einem oder mehreren der Ansprüche 1 bis 8, **dadurch gekennzeichnet, daß** zusammenhängende Kunststoffformteile nach dem Preßvorgang getrennt werden.

10. Verfahren nach einem oder mehreren der Ansprüche 1 bis 9, **dadurch gekennzeichnet, daß** als Formmasse duroplastische und/oder thermoplastische Kunststoffformmassen verwendet werden.
